# FASCICULE DE BREVET EUROPEEN

(11) **EP 3 114 386 B1**
(45) Date de publication et mention de la délivrance du brevet: **19.12.2018**
(21) Numéro de dépôt: 15711249.1
(22) Date de dépôt: 24.02.2015
(51) Int. Cl.: F16L 59/14, F16L 59/075, F16L 59/08

(54) **LIGNE DE TRANSFERT DE FLUIDE CYROGÉNIQUE**
ÜBERTRAGUNGSLEITUNG FÜR KRYOGENES FLUID
CRYOGENIC FLUID TRANSFER LINE

(30) Priorité: 06.03.2014 FR 1451829
(43) Date de publication de la demande: 11.01.2017
(73) Titulaire: L'Air Liquide Société Anonyme pour l'Etude et l'Exploitation des Procédés Georges Claude, 75007 Paris (FR)
(72) Inventeur: BARET, Fabien, F-38600 Fontaine (FR); DUVAL, Stéphane, F-38160 Saint Appolinard (FR)
(74) Mandataire: De Cuenca, Emmanuel Jaime
(86) Numéro de dépôt international: PCT/FR2015/050438
(87) Numéro de publication internationale: WO 2015/132503

(56) Documents cités:
- US-A- 2 930 407
- US-A- 3 343 035
- US-A- 3 743 760
- US-A- 3 808 351
- US-A- 3 945 215
- US-A1- 2010 252 698

## Description

La présente invention concerne une ligne de transfert de fluide cyrogénique.

L'invention concerne plus particulièrement une ligne de transfert de fluide cyrogénique comprenant une enveloppe extérieure tubulaire abritant au moins deux tubes intérieurs de transfert de fluide et un écran thermique formant une paroi d'isolation disposée autour des tubes intérieurs, l'enveloppe extérieure comprenant une ouverture latérale de pompage raccordée à un organe de pompage destiné à former un vide d'air dans l'enveloppe extérieure, l'écran thermique comprenant un orifice situé de façon adjacente à l'ouverture et un cache optique, le cache optique étant disposé en regard de l'orifice et dans un plan distinct de celui de la paroi de l'écran thermique, pour empêcher ou limiter le rayonnement thermique direct de l'enveloppe extérieure vers les tubes intérieurs.

Cet orifice forme ainsi un chemin privilégié pour le gaz pompé qui permet d'augmenter la conductance au travers de l'écran thermique et donc améliorer l'efficacité du pompage donc du vide et la performance thermique finale de la ligne cryogénique.

Les lignes de transferts de fluides cryogéniques comprennent généralement une enveloppe extérieure abritant, dans son volume interne sous vide, un ou plusieurs tubes (conduites) véhiculant de fluide à température cryogénique (par exemple entre 4K et 80K) et un système d'isolation thermique.

Les documents FR2803898A1 et EP1020678A1 illustrent des exemples de détails de lignes de transfert de fluides cryogéniques.

Le système d'isolation thermique de telles lignes comprend généralement un écran thermique (parfois appelé également « écran froid) comprenant une paroi conductrice (aluminium ou autre) disposées autour du ou des tubes et refroidie (« thermalisée ») par exemple via un contact avec un tube froid (à 80K par exemple).

Le système d'isolation thermique comprend également généralement une isolation thermique multicouche disposée entre l'écran thermique et l'enveloppe extérieure.

Le document US3945215 décrit une telle architecture.

L'écran thermique est centré dans l'enveloppe extérieure via des organes séparateurs disposés régulièrement sur toute sa longueur et maintenu sur un des tubes qui est utilisé pour sa thermalisation via des points répartis sur la longueur. De même, le ou les tubes de transfert de fluide sont maintenus via des points fixes et glissants disposés transversalement dans l'enveloppe extérieure.

Pour réaliser un vide d'air dans l'enveloppe 2 extérieure, cette dernière comprend en général une ouverture 5 latérale de pompage raccordée à un organe 6 de pompage.

Le pompage aspire donc du gaz :
- dans l'espace compris entre l'isolation multicouche et l'enveloppe extérieure,
- au travers de l'isolation multicouche,
- entre les interstices de l'écran thermique (interstices du fait de la structure de l'écran thermique constituée de tronçons assemblés bouts à bouts).

Le pompage dans le volume interne de l'écran froid (où se trouvent les tubes qui transportent le fluide) est alors fortement ralenti et limité par les pertes de charges et la conductance dans la couche d'isolation et entre les jonctions de l'écran thermique. Ceci peut fortement influencer la performance thermique finale de la ligne de transfert car le niveau de pression minimum souhaité n'est alors pas forcément atteint en certains endroits, et ce quelque soit les capacités de pompage mises en oeuvre.

Un but de la présente invention est de pallier tout ou partie des inconvénients de l'art antérieur relevés ci-dessus.

A cette fin, la ligne de transfert selon l'invention, par ailleurs conforme à la définition générique qu'en donne le préambule ci-dessus, est définie par la revendication 1. C'est-à-dire, que le cache optique comprend une plaque de matériau conducteur de la chaleur, notamment un métal, du cuivre ou de l'aluminium et ladite plaque est thermalisée, c'est-à-dire refroidie par contact et conduction avec une partie froide de la ligne de transfert servant à la thermalisation de l'écran thermique et le cache optique est refroidi par contact et conduction avec l'écran thermique via au moins une tresse de liaison en matériau conducteur de la chaleur notamment au moins l'un parmi du cuivre ou de l'aluminium.

Par ailleurs, des modes de réalisation de l'invention peuvent comporter l'une ou plusieurs des caractéristiques suivantes :
- le cache optique est dimensionné et positionné relativement à l'orifice pour intercepter tous les rayons optiques rectilignes partant de enveloppe extérieure et se dirigeant vers les tubes intérieurs au travers de l'orifice, c'est-à-dire que quelle que soit l'angle de vision, l'enveloppe extérieure n'est pas directement visible par les tubes intérieurs au travers de l'orifice,
- le cache optique comprend une couche de matériau isolant thermique notamment une structure multicouche (« MLI »),
- l'écran thermique est thermalisé c'est-à-dire dire refroidi par contact et conduction thermique avec l'un des tubes intérieurs,
- selon une direction transversale à la ligne, le cache optique est situé entre l'écran thermique et les tubes intérieurs,
- selon une direction transversale à la ligne, le cache optique est situé entre l'écran thermique et l'enveloppe extérieure,
- la section de passage de l'orifice a une surface comprise entre 0,8 fois et cinq fois la surface de la section de passage de l'ouverture latérale
- l'espace situé entre le cache optique et l'écran thermique peut être compris entre une fois et cinq fois la section de passage de l'orifice,
- selon une direction transversale à la ligne, l'orifice de l'écran thermique est situé en face de l'ouverture de l'enveloppe extérieure ou dans une zone adjacente à la portion de l'écran thermique située en face de ladite ouverture,
- le cache optique est relié rigidement à l'écran thermique via au moins une tige de liaison,
- l'écran thermique est thermalisé à une température comprise entre 50K et 100K et de préférence comprise entre 70K et 90K,
- le cache optique est thermalisé à une température comprise entre 50K et 100K et de préférence comprise entre 70K et 90K,
- l'écran thermique comprend une paroi cylindrique formée de tronçons tubulaire ou de demi-tronçons tubulaires monté et maintenus dans l'enveloppe extérieure via des organes d'espacement,
- la ligne comprend des organes de maintien du au moins un tube intérieur, les organes de maintien étant disposés transversalement dans l'enveloppe extérieure et comprenant un passage respectif pour le au moins un tube intérieur.
- la ligne s'étend selon une direction longitudinale,
- selon une direction transversale à la ligne, le cache optique est situé dans un plan distinct de la au moins une couche d'isolation thermique et situé notamment dans un plan parallèle à la direction longitudinale de la ligne,
- selon une direction transversale à la direction longitudinale de la ligne, le cache optique est situé entre la au moins une couche d'isolation thermique et le au moins un tube ou entre l'enveloppe extérieure et la au moins une couche d'isolation thermique,
- la couche d'isolation thermique comprend une structure multicouche, notamment comprenant plusieurs couches d'écran et de couches intercalaires,
- l'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en coupe longitudinale, schématique et partielle, illustrant un exemple de structure et de fonctionnement d'un tronçon de ligne de transfert de fluide cryogénique selon l'invention,
- la figure 2 représente une vue en coupe, schématique et partielle, illustrant un détail de la ligne de la figure 1 selon un premier mode de réalisation d'un orifice muni d'un cache de l'écran thermique,
- la figure 3 représente une vue en coupe, schématique et partielle, illustrant un détail de la ligne de la figure 1 selon un second mode de réalisation d'un orifice muni d'un cache de l'écran thermique.

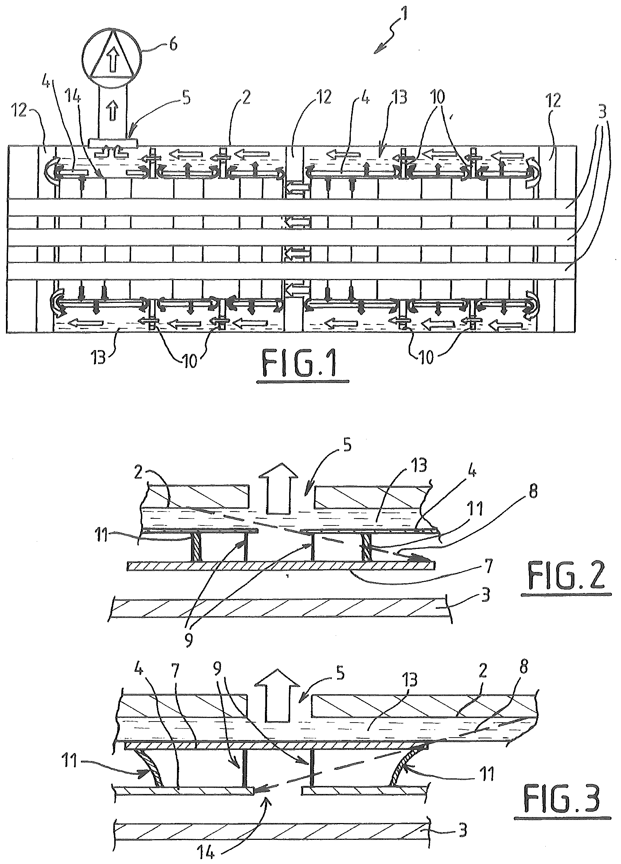

La figure 1 illustre un exemple d'un tronçon de ligne de transfert de fluide cyrogénique.

Ce dispositif comprend classiquement une enveloppe extérieure 2 tubulaire abritant dans cet exemple plusieurs tubes 3 intérieurs destinés à transporter respectivement des fluides cryogéniques. Ce segment de ligne illustré à titre d'exemple non limitatif comporte trois tubes 3 intérieurs maintenus parallèles via des organes 12 de maintien fixes ou glissants (par exemple des plaques montées transversalement et comprenant des passages recevant les tubes 3). Le terme « transversal » se réfère à une direction perpendiculaire à la direction « longitudinale » parallèle à l'axe longitudinal de la ligne et des tubes (direction de l'écoulement des fluides).

L'enveloppe 2 extérieure abrite également un écran thermique 4 formant une paroi d'isolation autour des tubes 3 intérieurs. L'écran thermique 4 met à l'abri les tubes 3 du rayonnement extérieur à 300K. L'écran thermique 4 est par exemple composé de tronçons ou demi-tronçons cylindriques assemblés bouts à bouts pour former une gaine cylindrique autour des tubes. L'écran 4 thermique est par exemple centré par des organes d'espacement 10 prenant appui sur l'enveloppe 2 extérieure et maintenu sur un des tubes 3 qui est utilisé pour la thermalisation (c'est-à-dire le refroidissement) de l'écran thermique 4 via des points fixes et glissants.

L'écran 4 thermique est de préférence constitué d'aluminium, de cuivre ou de tout autre matériau approprié et est de préférence thermalisé, c'est-à-dire refroidi ou maintenu à une température déterminée par contact et conduction avec une source de froid, notamment un des tubes 3 de transfert. Par exemple l'écran thermique est maintenu à une température de l'ordre de 80K.

Une isolation thermique 13 est également prévue à l'intérieur de l'enveloppe 2 intérieure, notamment entre l'écran thermique 4 et l'enveloppe 2 extérieure. Cette isolation 13 symbolisée par des pointillés sur les figures peut comprendre une structure multicouche connue en soit (« MLI » pour « Multi Layer Insulation ») comprenant plusieurs couches alternées de feuilles d'aluminium (écran) et de couches intercalaires de papier ou de fibre de verre submicronique, de polyester ou analogue.

Les couches d'écran peuvent être du type connu en soit notamment : de l'aluminium, du Mylar ® (polyester) aluminisé souple à double face, du Kapton®.

Les couches intercalaires peuvent être notamment du type parmi : tulle de polyester, Lydall®, Dextar®, Bolloré®.

D'autres systèmes d'isolation appropriés peuvent être prévus.

Classiquement, l'enveloppe extérieure 2 comporte une ouverture 5 latérale de pompage raccordée à un organe 6 de pompage par exemple une pompe à vide.

L'organe 6 de pompage est destiné à former un vide d'air dans le volume interne de l'enveloppe extérieure 2.

Selon une particularité avantageuse, l'écran thermique 4 comprend un orifice 14 situé de façon adjacente à l'ouverture 5 de pompage pour faciliter le pompage et la réalisation d'un vide relatif dans le volume intérieur de l'enveloppe 2 extérieure.

L'orifice 14 est réalisé de préférence au droit (en face) de l'ouverture 5 et du port de pompage. Bien entendu l'orifice 14 peut être légèrement décalé longitudinalement ou transversalement par rapport à l'ouverture 5 mais de préférence il est situé au plus près de l'ouverture 5. Ceci permet d'améliorer les temps de pompage, le niveau de pression global dans l'enveloppe sous vide et donc la performance thermique d'ensemble de ligne cryogénique.

Pour éviter ou limiter l'entrée de chaleur via cet orifice 14 notamment par rayonnement depuis l'enveloppe 2 extérieure (qui est par exemple à une température de 300K) vers les tubes 3 intérieurs, de préférence la ligne 1 comprend un cache 7 dit « cache optique ».

Comme illustré à la figure 2, le cache 7 optique est disposé en regard de l'orifice 14 et de préférence dans un plan distinct de celui de la paroi de l'écran 4 thermique. Le cache 7 optique forme une barrière pour empêcher ou limiter le rayonnement thermique direct de l'enveloppe extérieure 2 vers les tubes 3 intérieurs.

Dans l'exemple de la figure 2 le cache optique est situé entre l'écran 4 thermique et l'enveloppe 2 extérieure

De préférence, le cache 7 optique est dimensionné et positionné relativement à l'orifice 14 pour intercepter tous les rayons optiques 8 rectilignes partant de enveloppe extérieure 2 et se dirigeant vers les tubes 3 intérieurs au travers de l'orifice 14. C'est-à-dire que quelle que soit l'angle de vision, l'enveloppe extérieure 2 n'est de préférence pas directement visible par les tubes 3 intérieurs au travers de l'orifice 14.

Par exemple, la section de passage de l'orifice 14 a une surface comprise entre 0.8 fois et cinq fois la surface de la section de passage de l'ouverture 5, et notamment comprise entre une fois et quatre fois la surface de la section de passage de l'ouverture 5.

De même, l'espace annulaire situé entre le cache 7 optique et l'écran thermique 4 peut être compris entre une fois et cinq fois la section de passage de l'orifice 5. C'est-à-dire que la surface de passage qui est située entre la périphérie du cache optique 7 et l'écran thermique 4 permettant au gaz de relier l'orifice 14 est comprise de préférence entre une fois et cinq fois la surface de la section de passage de l'ouverture 5. Cette surface de passage entre le cache optique 7 et l'écran 4 est donnée par : distance entre le cache optique 7 et l'écran thermique 4 multipliée par le périmètre du cache optique 7.

Le cache 7 optique peut être relié rigidement à l'écran thermique 4 via au moins et de préférence deux tiges 9 de liaison et de préférences plusieurs tiges 9 et notamment des tiges 9 filetées.

Le cache 7 optique peut comprendre une plaque de matériau conducteur de la chaleur, notamment un métal, du cuivre, de l'aluminium et cette plaque est de préférence thermalisée, c'est-à-dire refroidie par contact et conduction avec une partie froide de la ligne de transfert, notamment l'écran 4 thermique.

En plus des tiges 9 de liaison, le cache 7 optique est refroidi par contact et conduction avec l'écran thermique 4 via une ou plusieurs tresse 11 de liaison en matériau conducteur de la chaleur notamment au moins l'un parmi : du cuivre, de l'aluminium.

De même, le cache 7 optique peut comporter au moins une épaisseur d'isolant thermique, par exemple de même nature que l'isolant de la couche d'isolation 13 située entre l'écran 4 thermique et l'enveloppe 2 extérieure.

Cet agencement permet un pompage efficace (la sortie de gaz pompé est symbolisée par une flèche à la figure 2 tout en limitant les entrées de chaleur dans la ligne 1 isolée sous vide.

La figure 1 symbolise via une multitude de flèches les différents passages du flux de gaz pompé dans le segment de la ligne 1 cryogénique.

L'exemple de la figure 3 se distingue de celui de la figure 2 uniquement en ce que le cache 7 optique est situé entre l'écran 4 thermique et les tubes 3 intérieurs. C'est-à-dire que le cache 7 optique est situé à l'intérieur du volume de l'écran 4 thermique. Par soucis de concision, les éléments identiques à ceux décrits précédemment sont désignés par les mêmes références numériques et ne sont pas décrits une seconde fois. Ces deux alternatives permettent notamment d'adapter la localisation du cache 7 optique en fonction de la place disponible dans la ligne 1.

On conçoit donc aisément que tout en étant de structure simple et peu coûteuse, l'invention permet de résoudre avantageusement les problèmes de l'art antérieur.

## Revendications

1. Ligne de transfert de fluide cyrogénique comprenant une enveloppe extérieure (2) tubulaire abritant au moins deux tubes (3) intérieurs de transfert de fluide et un écran thermique (4) formant une paroi d'isolation disposée autour des tubes (3) intérieurs, l'enveloppe extérieure (2) comprenant une ouverture (5) latérale de pompage destinée à être raccordée à un organe (6) de pompage destiné à former un vide d'air dans l'enveloppe extérieure (2), l'écran thermique (4) comprenant un orifice (14) situé de façon adjacente à l'ouverture (5), la ligne comprenant également au moins une couche (13) d'isolation thermique située à l'intérieur de l'enveloppe (2) extérieure, **caractérisée en ce que** la ligne comprend en outre au moins une tresse (11) de liaison en matériau conducteur de la chaleur notamment au moins l'un parmi: du cuivre, de l'aluminium, et un cache (7) optique distinct de la ou les couches (13) d'isolation thermique, le cache (7) optique comprenant une plaque de matériau conducteur de la chaleur, notamment un métal, du cuivre ou de l'aluminium et **en ce que** ladite plaque est thermalisée, c'est-à-dire refroidie par contact et conduction avec une partie froide de la ligne de transfert servant à la thermalisation de l'écran thermique (4), le cache (7) optique étant disposé en regard de l'orifice (14) et dans un plan distinct de celui de la paroi de l'écran (4) thermique, pour empêcher ou limiter le rayonnement thermique direct de l'enveloppe extérieure (2) vers les tubes (3) intérieurs, le cache (7) optique étant refroidi par contact et conduction avec l'écran thermique (4) via ladite au moins une tresse (11) de liaison en matériau conducteur de la chaleur notamment au moins l'un parmi du cuivre ou de l'aluminium.

2. Ligne selon la revendication 1 **caractérisée en ce que**, selon une direction transversale à la ligne, le cache optique (7) est situé dans un plan distinct de la au moins une couche (13) d'isolation thermique et situé notamment dans un plan parallèle à la direction longitudinale de la ligne.

3. Ligne selon la revendication 2, **caractérisée en ce que** selon une direction transversale à la direction longitudinale de la ligne, le cache (7) optique est situé entre la au moins une couche (13) d'isolation thermique et le au moins un tube ou entre l'enveloppe (2) extérieure et la au moins une couche (13) d'isolation thermique.

4. Ligne selon l'une quelconque des revendications 1 à 3, **caractérisée en ce que** la couche (13) d'isolation thermique comprend une structure multicouche, notamment comprenant plusieurs couches d'écran et de couches intercalaires.

5. Ligne selon l'une quelconque des revendications 1 à 4, **caractérisée en ce que** le cache (7) optique est dimensionné et positionné relativement à l'orifice (14) pour intercepter tous les rayons optiques (8) rectilignes partant de enveloppe extérieure (2) et se dirigeant vers les tubes (3) intérieurs au travers de l'orifice (14), c'est-à-dire que quelle que soit l'angle de vision, l'enveloppe extérieure (2) n'est pas directement visible par les tubes (3) intérieurs au travers de l'orifice (14).

6. Ligne selon l'une quelconque des revendications 1 à 5, **caractérisée en ce que** le cache (7) optique comprend une couche de matériau isolant thermique notamment une structure multicouche (« MLI ») distincte de la couche (13) d'isolation thermique, c'est-à-dire séparée de la couche (13) d'isolation thermique..

7. Ligne selon l'une quelconque des revendications 1 à 6, **caractérisée en ce que** l'écran thermique (4) est thermalisé c'est-à-dire dire refroidi par contact et conduction thermique avec l'un des tubes (3) intérieurs.

8. Ligne selon l'une quelconque des revendications 1 à 7, **caractérisée en ce que**, selon une direction transversale à la ligne, le cache (7) optique est situé entre l'écran (4) thermique et les tubes (3) intérieurs ou entre l'écran (4) thermique et l'enveloppe (2) extérieure.

9. Ligne selon l'une quelconque des revendications 1 à 8, **caractérisée en ce que** la section de passage de l'orifice (14) a une surface comprise entre 0,8 fois et cinq fois la surface de la section de passage de l'ouverture (5) latérale.

10. Ligne selon l'une quelconque des revendications 1 à 9, **caractérisée en ce que**, l'espace situé entre le cache (7) optique et l'écran thermique (4) peut être compris entre une fois et cinq fois la section de passage de l'orifice 5.

11. Ligne selon l'une quelconque des revendications 1 à 10, **caractérisée en ce que**, selon une direction transversale à la ligne, l'orifice (14) de l'écran (4) thermique est situé en face de l'ouverture (5) de l'enveloppe extérieure ou dans une zone adjacente à la portion de l'écran (4) thermique située en face de ladite ouverture (5).

12. Ligne selon l'une quelconque des revendications 1 à 11, **caractérisée en ce que** le cache (7) optique est relié rigidement à l'écran thermique (4) via au moins une tige (9) de liaison.

## Patentansprüche

1. Übertragungsleitung für kryogenes Fluid, umfassend eine rohrförmige Außenhülle (2), die mindestens zwei Innenrohre (3) zur Fluidübertragung aufnimmt, und einen Hitzeschild (4), der eine Isolierwand bildet, die um die Innenrohre (3) herum angeordnet ist, wobei die Außenhülle (2) eine seitliche Pumpöffnung (5) umfasst, die zum Anschließen an ein Pumporgan (6) zum Bilden eines Luftvakuums in der Außenhülle (2) bestimmt ist, wobei der Hitzeschild (4) eine Bohrung (14) umfasst, die sich angrenzend an die Öffnung (5) befindet, wobei die Leitung auch mindestens eine Wärmeisolierschicht (13) umfasst, die sich innerhalb der Außenhülle (2) befindet, **dadurch gekennzeichnet, dass** die Leitung weiter mindestens ein Verbindungsgeflecht (11) aus wärmeleitendem Material umfasst, insbesondere mindestens eines aus: Kupfer, Aluminium, und eine von der/den Wärmeisolierschicht(en) (13) getrennte optische Abdeckung (7), wobei die optische Abdeckung (7) eine Platte aus wärmeleitendem Material, insbesondere einem Metall, aus Kupfer oder Aluminium, umfasst und dass die Platte thermalisiert, d. h. durch Kontakt und Leitung mit einem kalten Teil der Übertragungsleitung gekühlt wird, der zur Thermalisierung des Hitzeschildes (4) dient, wobei die optische Abdeckung (7) gegenüber der Bohrung (14) und in einer von der Wand des Hitzeschildes (4) getrennten Ebene angeordnet ist, um die direkte Wärmestrahlung aus der Außenhülle (2) in Richtung der Innenrohre (3) zu verhindern oder zu begrenzen, wobei die optische Abdeckung (7) durch Kontakt und Leitung mit dem Hitzeschild (4) über das mindestens eine Verbindungsgeflecht (11) aus wärmeleitendem Material, insbesondere mindestens einem aus Kupfer oder Aluminium, gekühlt wird.

2. Leitung nach Anspruch 1, **dadurch gekennzeichnet, dass** sich die optische Abdeckung (7) in einer Richtung quer zur Leitung in einer von der mindestens einen Wärmeisolierschicht (13) getrennten Ebene und insbesondere in einer Ebene parallel zur Längsrichtung der Leitung befindet.

3. Leitung nach Anspruch 2, **dadurch gekennzeichnet, dass** sich die optische Abdeckung (7) in einer Richtung quer zur Längsrichtung der Leitung zwischen der mindestens einen Wärmeisolierschicht (13) und dem mindestens einen Rohr oder zwischen der Außenhülle (2) und der mindestens einen Wärmeisolierschicht (13) befindet.

4. Leitung nach einem der Ansprüche 1 bis 3, **dadurch gekennzeichnet, dass** die Wärmeisolierschicht (13) eine Mehrschichtstruktur umfasst, die insbesondere mehrere Abschirmschichten und Zwischenschichten umfasst.

5. Leitung nach einem der Ansprüche 1 bis 4, **dadurch gekennzeichnet, dass** die optische Abdeckung (7) relativ zur Bohrung (14) bemessen und positioniert ist, um alle von der Außenhülle (2) ausgehenden und sich durch die Bohrung (14) in Richtung der Innenrohre (3) bewegenden geradlinigen optischen Strahlen (8) abzufangen, d. h. dass die Außenhülle (2) unabhängig vom Blickwinkel nicht direkt durch die Innenrohre (3) durch die Bohrung (14) sichtbar ist.

6. Leitung nach einem der Ansprüche 1 bis 5, **dadurch gekennzeichnet, dass** die optische Abdeckung (7) eine Schicht aus wärmeisolierendem Material, insbesondere eine Mehrschichtstruktur ("MLI"), umfasst, die von der Wärmeisolierschicht (13) verschieden, d. h. von der Wärmeisolierschicht (13) getrennt ist.

7. Leitung nach einem der Ansprüche 1 bis 6, **dadurch gekennzeichnet, dass** der Hitzeschild (4) thermalisiert, d. h. durch Kontakt und Wärmeleitung mit einem der Innenrohre (3) gekühlt wird.

8. Leitung nach einem der Ansprüche 1 bis 7, **dadurch gekennzeichnet, dass** sich die optische Abdeckung (7) in einer Richtung quer zur Leitung zwischen dem Hitzeschild (4) und den Innenrohren (3) oder zwischen dem Hitzeschild (4) und der Außenhülle (2) befindet.

9. Leitung nach einem der Ansprüche 1 bis 8, **dadurch gekennzeichnet, dass** der Durchgangsquerschnitt der Bohrung (14) eine Oberfläche zwischen dem 0,8-fachen und dem Fünffachen der Oberfläche des Durchgangsquerschnitts der seitlichen Öffnung (5) aufweist.

10. Leitung nach einem der Ansprüche 1 bis 9, **dadurch gekennzeichnet, dass** der Raum zwischen der optischen Abdeckung (7) und dem Hitzeschild (4) zwischen dem Einfachen und Fünffachen des Durchgangsquerschnitts der Bohrung (5) betragen kann.

11. Leitung nach einem der Ansprüche 1 bis 10, **dadurch gekennzeichnet, dass** sich die Bohrung (14) des Hitzeschildes (4) in einer Richtung quer zur Leitung gegenüber der Öffnung (5) der Außenhülle oder in einem Bereich angrenzend an den Abschnitt des Hitzeschildes (4) gegenüber der Öffnung (5) befindet.

12. Leitung nach einem der Ansprüche 1 bis 11, **dadurch gekennzeichnet, dass** die optische Abdeckung (7) über mindestens eine Verbindungsstange (9) fest mit dem Hitzeschild (4) verbunden ist.

## Claims

1. Cryogenic fluid-transfer line comprising a tubular outer shell (2) housing at least two interior fluid-transfer tubes (3) and a heat shield (4) forming an insulating wall arranged around the interior tubes (3), the outer shell (2) comprising a lateral pumping opening (5) intended to be connected to a pumping member (6) intended to create a vacuum in the outer shell (2), the heat shield (4) comprising an orifice (14) located adjacent to the opening (5), the line also comprising at least one heat-insulating layer (13) located inside the outer shell (2), **characterised in that** the line further comprises at least one connection braid (11) made from a heat-conducting material in particular at least one chosen among: copper, aluminium and an optical cover (7) separate from the heat-insulating layer or layers (13), the optical cover (7) comprising a plate of heat-conducting material, in particular a metal, copper or aluminium and **in that** said plate is thermalised, i.e. cooled by contact and conduction with a cold portion of the transfer line used for the thermalisation of the heat shield (4), the optical cover (7) being arranged facing the orifice (14) and in a plane separate from the one of the wall of the heat shield (4), in order to prevent or limit the direct thermal radiation from the outer shell (2) to the interior tubes (3), the optical cover (7) being cooled by contact and conduction with the heat shield (4) via said at least one connection braid (11) made from a heat-conducting material, in particular at least one chosen among: copper or aluminium.

2. Line according to claim 1 **characterised in that**, along a direction transversal to the line, the optical cover (7) is located in a plane separate from the at least one heat-insulating layer (13) and located in particular in a plane parallel to the longitudinal direction of the line.

3. Line according to claim 2, **characterised in that** along a direction transversal to the longitudinal direction of the line, the optical cover (7) is located between the at least one heat-insulating layer (13) and the at least one tube or between the outer shell (2) and the at least one heat-insulating layer (13).

4. Line according to any of claims 1 to 3, **characterised in that** the heat-insulating layer (13) comprises a multilayer structure, in particular comprising several shield layers and interlayers.

5. Line according to any of claims 1 to 4, **characterised in that** the optical cover (7) is sized and positioned relatively to the orifice (14) in order to intercept all of the straight optical rays (8) coming from the outer shell (2) and moving towards the interior tubes (3) through the orifice (14), i.e. regardless of the angle of vision, the outer shell (2) is not directly visible by the interior tubes (3) through the orifice (14).

6. Line according to any of claims 1 to 5, **characterised in that** the optical cover (7) comprises a layer of heat-insulating material, in particular a multilayer structure ("MLI"), separate from the heat-insulating layer (13), i.e. separated from the heat-insulating layer (13).

7. Line according to any of claims 1 to 6, **characterised in that** the heat shield (4) is thermalised i.e. cooled by contact and heat conduction with one of the interior tubes (3).

8. Line according to any of claims 1 to 7, **characterised in that**, along a direction transversal to the line, the optical cover (7) is located between the heat shield (4) and the interior tubes (3) or between the heat shield (4) and the outer shell (2).

9. Line according to any of claims 1 to 8, **characterised in that** the section of passage of the orifice (14) has a surface between 0.8 times and five times the surface of the section of passage of the lateral opening (5).

10. Line according to any of claims 1 to 9, **characterised in that**, the space located between the optical cover (7) and the heat shield (4) can be between one time and five times the section of passage of the orifice (5).

11. Line according to any of claims 1 to 10, **characterised in that**, along a direction transversal to the line, the orifice (14) of the heat shield (4) is located facing the opening (5) of the outer shell or in a zone adjacent to the portion of the heat shield (4) located facing said opening (5).

12. Line according to any of claims 1 to 11, **characterised in that** the optical cover (7) is rigidly connected to the heat shield (4) via at least one connecting rod (9).
